(19) Europäisches Patentamt
European Patent Office
Office européen des brevets

(11) **EP 4 542 810 A1**

(12) **EUROPÄISCHE PATENTANMELDUNG**

(43) Veröffentlichungstag:
**23.04.2025 Patentblatt 2025/17**

(21) Anmeldenummer: **24194628.4**

(22) Anmeldetag: **14.08.2024**

(51) Internationale Patentklassifikation (IPC):
*H02J 3/16* (2006.01)   *H02J 3/18* (2006.01)

(52) Gemeinsame Patentklassifikation (CPC):
**H02J 3/1878; H02J 3/16;** H02J 3/1885;
H02J 2203/10

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **17.10.2023 CH 11482023**

(71) Anmelder: **BKW Energie AG**
**3013 Bern (CH)**

(72) Erfinder:
• **ROTHERMANN, Philippe**
**1712 Tafers (CH)**

• EGLI, Kasimir
3600 Thun (CH)
• BEUTLER, Thomas
2562 Port (CH)
• FERNANDEZ, Juan Pablo
1744 Chenens (CH)
• RAMACKERS, Maurice
8843 Schindellegi (CH)

(74) Vertreter: **Keller Schneider**
**Patent- und Markenanwälte AG**
**Eigerstrasse 2**
**Postfach**
**3000 Bern 14 (CH)**

(54) **SPANNUNGSHALTUNG MITTELS GESTEUERTEN BLINDLEISTUNGSFLÜSSEN**

(57) Die Erfindung betrifft ein Verfahren zum Steuern von Blindleistungsflüssen zwecks Spannungshaltung an mindestens einem Ausspeisepunkt (1) zwischen einerseits einem Höchstspannungsnetz (2) und andererseits einem Mittel- oder Hochspannungsnetz (3), wobei das Mittel- oder Hochspannungsnetz (3) eine Vielzahl von Knoten (4) aufweist, wobei an der Vielzahl von Knoten (4) mindestens ein Generator (6) und eine Vielzahl von Lasten (5) angeschlossen sind, und wobei das Höchstspannungsnetz (2) und das Mittel- oder Hochspannungsnetz (3) durch mindestens einen Transformator (7) verbunden sind. Das Verfahren umfasst ein Empfangen (8) eines höchstspannungsnetzseitigen Spannungsmesswerts $V_{ME}$ und ein Empfangen eines höchstspannungsnetzseitigen Spannungssollwerts $V_{SP}$ an dem mindestens einen Ausspeisepunkt (1), sowie ein Empfangen (10) von Zustandsdaten in Bezug auf Einspeisungen in das Mittel- oder Hochspannungsnetz (3) über mindestens einen Einspeiseknoten in der Vielzahl von Knoten (4) und in Bezug auf an die Vielzahl von Knoten (4) angeschlossenen Lasten (5). Das Verfahren umfasst auch ein Bestimmen von mindestens einer Stellgrösse durch eine Minimierung oder Maximierung einer von dem höchstspannungsnetzseitigen Spannungsmesswert $V_{ME}$ und dem höchstspannungsnetzseitigen Spannungssollwert $V_{SP}$ abhängigen Zielfunktion, und ein anschliessendes Einstellen eines Stufenschalters des Transformators und/oder ein anschliessendes Einstellen eines Blindleistungsreglers des Generators und/oder ein anschliessendes Einstellen einer Blindleistungskompensationsanlage basierend auf der bestimmten mindestens einen Stellgrösse. Die Erfindung betrifft auch eine Recheneinheit und ein Computerprogrammprodukt.

Fig. 1

## Beschreibung

### Technisches Gebiet

Die Erfindung betrifft ein Verfahren zum Steuern von Blindleistungsflüssen in einem Stromnetz zwecks Spannungshaltung sowie eine Recheneinheit und ein Computerprogrammprodukt.

### Stand der Technik

Als Folge der zunehmenden Umstellung der Stromproduktion weg von zentralen Grosskraftwerken, die direkt in ein Höchstspannungsnetz einspeisen, hin zu kleineren und dezentral agierenden Stromproduzenten, die in ein Mittel- oder Hochspannungsnetz einspeisen, ist eine Regelung des Stromnetzes komplizierter geworden. Wichtige Regelparameter sind dabei insbesondere die Netzfrequenz sowie die Netzspannung, die beide in einem engen Bereich um bestimmte Sollgrössen herum gehalten werden sollten.

Zur Spannungshaltung der Netzspannung können, wie aus dem Stand der Technik bekannt, Blindleistungsflüsse gezielt eingesetzt werden, wobei diese bisher überwiegend ad hoc und manuell von Netzoperateuren eingestellt werden. Ein Nachteil der aus dem Stand der Technik bekannten Lösungen mittels solcherart gesteuerter Blindleistungsflüsse ist, dass eine Spannungshaltung häufig nicht ideal ausgeführt wird. Ein weiterer Nachteil ist, dass ein Netzoperateur nicht unbedingt die am besten geeigneten Betriebsmittel, auf die Zugriff besteht, zur Spannungshaltung verwendet, so dass das gesamte Stromnetz im Hinblick auf einen Ressourcenverbrauch nicht optimal gesteuert wird.

### Darstellung der Erfindung

Aufgabe der Erfindung ist es, ein Verfahren zur Spannungshaltung, eine Recheneinheit zum Ausführen des Verfahren und ein entsprechendes Computerprogrammprodukt bereitzustellen, welches zumindest einige der aus dem Stand der Technik bekannten Nachteile behebt.

Die Lösung der Aufgabe ist durch die Merkmale der Ansprüche 1, 10 und 11 definiert. Gemäss einem ersten Aspekt der Erfindung betrifft die Erfindung ein Verfahren zum Steuern von Blindleistungsflüssen zwecks Spannungshaltung an mindestens einem Ausspeisepunkt zwischen einerseits einem Höchstspannungsnetz und andererseits einem Mittel- oder Hochspannungsnetz, wobei das Mittel- oder Hochspannungsnetz eine Vielzahl von Knoten aufweist, wobei an der Vielzahl von Knoten mindestens ein Generator und eine Vielzahl von Lasten angeschlossen sind, wobei das Höchstspannungsnetz und das Mittel- oder Hochspannungsnetz durch mindestens einen Transformator verbunden sind, und wobei das Verfahren die folgenden Schritte aufweist:

a) Empfangen eines höchstspannungsnetzseitigen Spannungsmesswerts $V_{ME}$ an dem mindestens einen Ausspeisepunkt;

b) Empfangen eines höchstspannungsnetzseitigen Spannungssollwerts $V_{SP}$ an dem mindestens einen Ausspeisepunkt;

c) Empfangen von Zustandsdaten in Bezug auf Einspeisungen in das Mittel- oder Hochspannungsnetz über mindestens einen Einspeiseknoten in der Vielzahl von Knoten und in Bezug auf an die Vielzahl von Knoten angeschlossenen Lasten;

d) Bestimmen von mindestens einer Stellgrösse in Bezug auf einen Stufenschalter eines Transformators des mindestens einen Transformators, und/oder in Bezug auf einen Blindleistungsregler eines Generators des mindestens einen Generators, der mit dem mindestens einen Einspeiseknoten verbunden ist, und/oder in Bezug auf eine Blindleistungskompensationsanlage im Mittel- oder Hochspannungsnetz, wobei die mindestens eine Stellgrösse durch eine Minimierung oder Maximierung einer von dem höchstspannungsnetzseitigen Spannungsmesswert $V_{ME}$ und dem höchstspannungsnetzseitigen Spannungssollwert $V_{SP}$ abhängigen Zielfunktion bestimmt wird, und wobei die Minimierung oder Maximierung der Zielfunktion mindestens eine Nebenbedingung aufweist, wobei eine erste Nebenbedingung der mindestens einen Nebenbedingung in Form von mit den empfangenen Zustandsdaten parametrisierten Lastflussgleichungen vorliegt; und

e) Einstellen des Stufenschalters des Transformators und/oder Einstellen des Blindleistungsreglers des Generators und/oder Einstellen der Blindleistungskompensationsanlage basierend auf der bestimmten mindestens einen Stellgrösse.

Am Höchstspannungsnetz kann als nominelle Spannung 220 Kilovolt (kV) oder 380 kV anliegen, am Mittelspannungsnetz kann eine Spannung im Bereich zwischen 1 bis 36 kV anliegen, und am Hochspannungsnetz kann eine Spannung im Bereich zwischen 36 bis 150 kV anliegen. Das erfindungsgemässe Verfahren stellt den Stufenschalter des Transformators und/oder den Blindleistungsregler des Generators und/oder die Blindleistungskompensationsanlage so ein, dass eine Spannungshaltung an dem mindestens einen Ausspeisepunkt, der sich zwischen einem Höchstspannungsnetz einerseits und einem Mittel- oder Hochspannungsnetz andererseits befindet, unterstützt wird.

Das Mittel- oder Hochspannungsnetz kann abstrakt so beschrieben werden, dass es eine Vielzahl von Knoten aufweist sowie Zweige, beispielsweise Freileitungen und Kabel, wobei ein Zweig zwei Knoten miteinander verbindet. Im Mittel- oder Hochspannungsnetz wird Energie durch an das Mittel- oder Hochspannungsnetz angeschlossene Lasten verbraucht. Durch an das Mittel- oder Hochspannungsnetz angeschlossene Generatoren, die beispielsweise als Kraftwerke ausgebildet sein können, kann wiederum Energie in das Mittel- oder Hochspannungsnetz eingespeist werden, wobei Generatoren über Einspeiseknoten mit dem Mittel- oder Hochspannungsnetz verbunden sind. In Modellen des Stromnetzes werden Knoten häufig als sogenannte PO-Knoten und PV-Knoten modelliert, wobei zusätzlich ein Referenzknoten nötig ist. Dabei unterscheiden sich die Knoten insbesondere darin, welche physikalischen Grössen (beispielsweise Scheinleistung, oder Wirkleistung, oder Blindleistung, oder Phase etc.) am Knoten bekannt sind, beziehungsweise welche unbekannt sind und im Rahmen einer, insbesondere stationären, Lastflussberechnung zu bestimmen sind. An Einspeiseknoten, die als PO-Knoten modelliert werden, sind dabei Wirk- und Blindleistung vorgegeben, und an als PV-Knoten modellierten Einspeiseknoten Wirkleistung und Spannungshöhe/Spannungsbetrag. Im Rahmen einer stationären Lastflussberechnung können Lasten als von der Spannung und der Frequenz unabhängige Scheinleistungsentnahmen an Lastknoten in der Vielzahl von Knoten modelliert werden.

Das erfindungsgemässe Verfahren verwendet einen höchstspannungsnetzseitigen Spannungsmesswert $V_{ME}$ an einem Ausspeiseknoten, wobei der Spannungsmesswert insbesondere an einem am Höchstspannungsnetz anliegenden Ausgang eines Kuppeltransformators zwischen dem Höchstspannungsnetz und dem Mittel- oder Hochspannungsnetz gemessen wird. Anstelle eines Spannungsmesswerts kann auch ein Spannungsschätzwert an dem Ausspeiseknoten verwendet werden, der beispielsweise von einer Höheren Entscheidungs- und Optimierungsfunktion (HEO) bereitgestellt werden kann, beispielsweise durch eine Lastflussberechnung. Im Falle mehrerer Ausspeiseknoten kann fürjeden Ausspeiseknoten ein separater höchstspannungsnetzseitiger Spannungsmesswert gemessen werden, und Spannungshaltung kann gleichzeitig an den mehreren Ausspeiseknoten durchgeführt werden. Die höchstspannungsnetzseitige Spannung an dem mindestens einen Ausspeiseknoten soll dabei im Idealfall dem empfangenen höchstspannungsnetzseitigen Spannungssollwert $V_{SP}$ entsprechen, das heisst es ist Zweck der Spannungshaltung, die höchstspannungsnetzseitige Spannung an dem mindestens einen Ausspeiseknoten so nah wie möglich zum Spannungssollwert $V_{SP}$ zu halten. Der zu erreichende Spannungssollwert kann dabei insbesondere von einem Betreiber des Höchstspannungsnetzes vorgegeben werden.

Zur Spannungshaltung werden gemäss dem erfindungsgemässen Verfahren gesteuerte Blindleistungsflüsse verwendet. Aus dem Stand der Technik sind zur gezielten Blindleistungssteuerung insbesondere bereits der Einsatz von Blindleistungskompensationsanlagen, Transformatoren mit Stufenschaltern und Generatoren bekannt. Erfindungsgemäss werden Stellgrössen, deren Adaptation veränderte Blindleistungsflüsse bewirkt, durch eine Minimierung oder Maximierung einer von dem höchstspannungsnetzseitigen Spannungsmesswert $V_{ME}$ und dem höchstspannungsnetzseitigen Spannungssollwert $V_{SP}$ abhängigen Zielfunktion bestimmt. Das erfindungsgemässe Verfahren kann voraussetzen, dass insbesondere Wirkleistungseinspeisungen von Generatoren in das Stromnetz unabhängig von der Optimierung zur Bestimmung der Stellgrössen bestimmt werden. Alternativ kann das erfindungsgemässe Verfahren auch dazu ausgebildet sein, gleichzeitig neben Blindleistungsflüssen auch Wirkleistungsflüsse, insbesondere zur Unterstützung der Frequenzhaltung, zu bestimmen. Das Verfahren kann demnach auch einen Frequenzsollwert für das Mittel- oder Hochspannungsnetz und einen entsprechenden Frequenzmesswert erhalten, und die Zielfunktion kann einen Frequenzzielfunktionsterm aufweisen, der von dem Frequenzsollwert und dem Frequenzmesswert abhängig ist. Um eine Frequenzhaltung mit möglichst geringen Netzverlusten zu erreichen, können in der Zielfunktion auch Netzwirkleistungsverluste berücksichtigt werden. Um Wirkleistungsflüsse steuern zu können, kann das erfindungsgemässe Verfahren auch weitere Stellgrössen bestimmen, mit deren Hilfe Wirkleistungsflüsse beeinflusst werden können. Durch die einem Stromnetz zugrundeliegenden physikalischen Gleichungen sind Blind- und Wirkleistungen im Allgemeinen miteinander gekoppelt, so dass im Regelfall eine Änderung eines Blindleistungsflusses auch zu einer Änderung eines Wirkleistungsflusses und umgekehrt führen kann.

Im Allgemeinen muss jede in ein Netz eingespeiste elektrische Energie entweder im Netz verbraucht werden oder anderweitig das Netz verlassen, das heisst, es liegt ein Gleichgewicht vor. Die als Nebenbedingung verwendeten Lastflussgleichungen schränken dabei den Lösungsraum der Optimierung dergestalt ein, dass bei der Minimierung oder Maximierung der Zielfunktion bestimmte Stellgrössen so bestimmt werden, dass die zugrundeliegenden Lastflüsse berücksichtigt werden, die von einer spezifischen Erzeugungs- und Verbrauchssituation sowie von einer Topologie des Netzes abhängig sind. Eine Lastflussberechnung, die basierend auf Lastflussgleichungen ausgeführt wird, kann demnach den elektrischen Zustand eines Stromnetzes im Falle einer bestimmten Belastung bestimmen und als Ausgabe komplexe Spannungszeiger an jedem der Knoten in der Vielzahl von Knoten bereitstellen. Die von erfindungsgemässen Verfahren empfangenen Zustandsdaten sind dergestalt ausgebildet, dass eine Lastflussberechnung ausgeführt werden kann, das heisst sie weisen insbesondere für eine Lastflussberechnung notwendige Messwerte aus dem Mittel- oder Hochspannungsnetz sowie, zumindest teilweise, Messwerte aus dem Höchstspannungsnetz auf. Die Zustandsdaten können von der HEO bereitgestellt werden.

Die durch das erfindungsgemässe Verfahren bestimmten Stellgrössen sind so ausgebildet, dass mit den bestimmten Stellgrössen eingestellte Blindleistungskompensationsanlagen, Generatoren oder Stufenschalter von Transformatoren die Blindleistungsflüsse im Mittel- oder Hochspannungsnetz so anpassen, dass höchstspannungsnetzseitige Spannungen an den Ausspeisepunkten in Richtung des Spannungssollwerts geführt werden. Da die Lastflussgleichungen im Allgemeinen nichtlinear ausgebildet sind und einige Optimierungsvariablen, beispielsweise einen Stufenschalter betreffend, ganzzahlig und andere Optimierungsvariablen, beispielsweise eine Blindleistungskompensationsanlage betreffend, reellwertig ausgebildet sind, können zur Optimierung der Zielfunktion Optimierungsalgorithmen verwendet werden, die für sogenannte *mixed-integer nonlinear programming* Probleme entwickelt wurden.

Falls die Optimierung der Zielfunktion mittels eines Optimierungsalgorithmus innerhalb eines vorgegebenen Zeitrahmens nicht hinreichend konvergiert, kann das erfindungsgemässe Verfahren auch einen Schritt eines Benachrichtigens eines Dispatchers aufweisen. Zur Bestimmung, ob hinreichende Konvergenz vorliegt, kann insbesondere der zeitliche Verlauf der Änderungen der Stellgrössen während der Durchführung des Optimierungsalgorithmus berücksichtigt werden. Der Dispatcher kann anschliessend zumindest kurzfristig die Kontrolle übernehmen und eine geforderte Spannungshaltung einstellen. Das erfindungsgemässe Verfahren kann auch so beschaffen sein, dass ein Dispatcher jederzeit die Kontrolle über das Mittel- oder Hochspannungsnetz oder Teile davon übernehmen kann, beispielsweise falls kritische Grenzwertverletzungen betreffend Ströme und/oder Spannungen im Mittel- oder Hochspannungsnetz detektiert werden.

In einer Ausführungsform liegen an dem mindestens einen Ausspeisepunkt einer oder mehrere Transformatoren des mindestens einen Transformators an. Der mindestens eine Ausspeisepunkt liegt dabei an der an das Höchstspannungsnetz angrenzenden Seite des einen oder der mehreren Transformatoren an. Der eine oder die mehreren Transformatoren können als Kuppeltransformatoren ausgebildet sein, und der mindestens eine Ausspeisepunkt kann als aktiver Ausspeisepunkt oder als halbaktiver Ausspeisepunkt ausgebildet sein.

Ausspeisepunkte können höchstspannungsnetzseitig einen oder mehrere Transformatoren zusammenfassen. Innerhalb eines Unterwerks/Umspannwerks können zum Beispiel unterschiedliche Spannungsebenen vorhanden sein, beispielsweise 220 kV und 380 kV. Zwei Transformatoren eines Mittel- oder Hochspannungsnetzbetreibers in demselben Unterwerk, die beide höchstspannungsnetzseitig mit einer Spannungsebene verbunden sind, zum Beispiel 220 kV, können in einem Ausspeisepunkt zusammengefasst werden. Eine Unterscheidung zwischen aktiven Ausspeisepunkten und halbaktiven Ausspeisepunkten wiederum kann dazu verwendet werden, um unterschiedliche Anforderungen an unterschiedliche Ausspeisepunkte zu stellen, die in der Zielfunktion berücksichtigt werden. Aktive Ausspeisepunkte können zum Beispiel so in der Zielfunktion abgebildet werden, dass eine Abweichung des Spannungsmesswerts vom Spannungssollwert am aktiven Ausspeisepunkt stärker gewichtet wird als dieselbe Abweichung an einem halbaktiven Ausspeisepunkt.

In einer weiteren Ausführungsform des erfindungsgemässen Verfahrens ist die Zielfunktion als gewichtete Summe mindestens folgender Terme ausgebildet: 1) ein erster Zielfunktionsterm für Netzwirkleistungsverluste; 2) ein zweiter Zielfunktionsterm für von dem mindestens einen Generator gelieferte oder bezogene Blindleistung; 3) ein dritter Zielfunktionsterm für von der Blindleistungskompensationsanlage gelieferte oder bezogene Blindleistung; 4) ein vierter Zielfunktionsterm für an einem aktiven Ausspeisepunkt vorliegende Blindleistung; und 5) ein fünfter Zielfunktionsterm für an einem halbaktiven Ausspeisepunkt vorliegende Blindleistung.

Falls beispielsweise nur ein Ausspeisepunkt vorhanden sein sollte, der zum Beispiel als aktiver Ausspeisepunkt ausgebildet ist, kann der fünfte Zielfunktionsterm mit einem Gewicht mit einem Wert '0' versehen werden, das heisst der fünfte Zielfunktionsterm fliesst in diesem Beispiel nicht in die Optimierung ein. Ähnliche Überlegungen gelten analog für die zweiten bis vierten Zielfunktionsterme der fünf Zielfunktionsterme. Falls mehr als ein Ausspeisepunkt eines Typs, beispielsweise zwei halbaktive Ausspeisepunkte, vorhanden sind, kann ein zusätzlicher Zielfunktionsterm gleichen Typs wie der fünfte Zielfunktionsterm bereitgestellt werden, so dass die Zielfunktion auch mehr als fünf Zielfunktionsterme aufweisen kann. Ähnliche Überlegungen gelten auch für aktive Ausspeisepunkte sowie den zweiten und dritten Zielfunktionsterm. Alternativ können auch mehrere Zielfunktionsterme eines Typs in einem einzelnen Zielfunktionsterm zusammengefasst werden: beispielsweise können zwei Blindkompensationsanlagen in einem einzelnen dritten Zielfunktionsterm zusammengefasst werden.

Netzwirkleistungsverluste können für Leitungen, Sammelschienenkupplungen, Transformatoren, Querzweige und Längszweige des Hoch- oder Mittelspannungsnetzes bestimmt werden. Blindleistungskompensationsanlagen können als an PO-Knoten angeschlossen modelliert werden.

Die Zielfunktion (ohne Nebenbedingungen) kann daher allgemein wie folgt modelliert werden: $f_{Ziel}(x, u) = c_1 f_1(x, u) + c_2 f_2(x, u) + c_3 f_3(x, u) + c_4 f_4(x, u) + c_5 f_5(x, u)$, wobei die Variable $u$ die zu bestimmenden Steuergrössen aufweist und die Variable $x$ Zustandsgrössen aufweist, die aus den Zustandsdaten mittels der Lastflussberechnung bestimmt werden können und insbesondere Spannungen, und/oder Phasen, und/oder Wirkleistungseinspeisungen, und/oder Blindleistungseinspeisungen an den Knoten aufweisen. $c_1$ bis $c_5$ sind Gewichte, und $f_1(\cdot, \cdot)$ bis $f_5(\cdot, \cdot)$ stellen den ersten, zweiten, dritten, vierten und fünften Zielfunktionsterm dar.

Eine Veränderung der Steuergrössen ändert im Allgemeinen auch die Zustandsgrössen.

In einer weiteren Ausführungsform des erfindungsgemässen Verfahrens weist die mindestens eine Nebenbedingung als weitere Nebenbedingung(en) mindestens eine der folgenden auf:

a) einen maximalen Scheinleistungsfluss über eine Leitung zwischen zwei Knoten der Vielzahl von Knoten,

b) einen minimalen oder maximalen Spannungsbetrag an einem Knoten der Vielzahl von Knoten,

c) ein von einem Arbeitspunkt des mindestens einen Generators abhängiges Blindleistungsband, in dem der Generator Blindleistung ohne Beeinträchtigung der vom Generator produzierten Wirkleistung liefern oder beziehen kann,

d) ein von einem Arbeitspunkt der Blindleistungskompensationsanlage abhängiges Blindleistungsband, in dem die Blindleistungskompensationsanlage Blindleistung liefern oder beziehen kann.

In einer weiteren Ausführungsform des erfindungsgemässen Verfahrens werden die Stellgrössen mittels einer Minimierung der Zielfunktion bestimmt, und ist für einen aktiven Ausspeisepunkt der vierte Zielfunktionsterm für an dem aktiven Ausspeisepunkt vorliegende Blindleistung wie folgt ausgebildet:

- Falls der Spannungsmesswert $V_{ME}$ kleiner ist als die Differenz zwischen dem Spannungssollwert $V_{SP}$ als Minuend und als Subtrahend der Summe aus einem Spannungstoleranzwert $V_{TOL}$ und einem ersten Spannungsfreiwert $V_{FR}^{(1)}$, das heisst $V_{ME} < V_{SP} - V_{TOL} - V_{FR}^{(1)}$, (i) sinkt mit zunehmender Lieferung von Blindleistung an das Höchstspannungsnetz ein Ausgangswert des vierten Zielfunktionsterms mit einem ersten Koeffizienten $C^{(1)}$ linear mit der gelieferten Blindleistung und (ii) steigt mit zunehmendem Bezug von Blindleistung aus dem Höchstspannungsnetz ein Ausgangswert des vierten Zielfunktionsterms mit einem zweiten Koeffizienten $C^{(2)}$ linear mit der bezogenen Blindleistung;

- Falls der Spannungsmesswert $V_{ME}$ a) grösser oder gleich gross ist im Vergleich mit der Differenz zwischen dem Spannungssollwert $V_{SP}$ als Minuend und als Subtrahend der Summe aus dem Spannungstoleranzwert $V_{TOL}$ und dem ersten Spannungsfreiwert $V_{FR}^{(1)}$ und b) kleiner oder gleich gross ist im Vergleich mit der Differenz zwischen dem Spannungssollwert $V_{SP}$ als Minuend und dem Spannungstoleranzwert $V_{TOL}$ als Subtrahend, das heisst $V_{SP} - V_{TOL} - V_{FR}^{(1)} \leq V_{ME} \leq V_{SP} - V_{TOL}$, (i) sinkt mit zunehmender Lieferung von Blindleistung an das Höchstspannungsnetz ein Ausgangswert des vierten Zielfunktionsterms mit dem ersten Koeffizienten $C^{(1)}$ linear mit der gelieferten Blindleistung und (ii) ist ein Ausgangswert des vierten Zielfunktionsterms bei Bezug von Blindleistung aus dem Höchstspannungsnetz im Wesentlichen unabhängig von der aus dem Höchstspannungsnetz bezogenen Blindleistung und entspricht der Ausgangswert im Wesentlichen dem Wert Null;

- Falls der Spannungsmesswert $V_{ME}$ a) grösser oder gleich gross ist im Vergleich mit der Differenz zwischen dem Spannungssollwert $V_{SP}$ als Minuend und dem Spannungstoleranzwert $V_{TOL}$ als Subtrahend und b) kleiner oder gleich gross ist im Vergleich mit der Summe aus dem Spannungssollwert $V_{SP}$ und dem Spannungstoleranzwert $V_{TOL}$, das heisst $V_{SP} - V_{TOL} \leq V_{ME} \leq V_{SP} + V_{TOL}$, (i) sinkt mit zunehmender Lieferung von Blindleistung an das Höchstspannungsnetz ein Ausgangswert des vierten Zielfunktionsterms mit dem ersten Koeffizienten $C^{(1)}$ linear mit der gelieferten Blindleistung und (ii) sinkt mit zunehmendem Bezug von Blindleistung aus dem Höchstspannungsnetz ein Ausgangswert des vierten Zielfunktionsterms mit dem ersten Koeffizienten $C^{(1)}$ linear mit der bezogenen Blindleistung;

- Falls der Spannungsmesswert $V_{ME}$ a) grösser oder gleich gross ist im Vergleich mit der Summe aus dem Spannungssollwert $V_{SP}$ und dem Spannungstoleranzwert $V_{TOL}$ und b) kleiner oder gleich gross ist im Vergleich mit der Summe aus dem Spannungssollwert $V_{SP}$, dem Spannungstoleranzwert $V_{TOL}$ und dem ersten Spannungsfreiwert $V_{FR}^{(1)}$, das heisst $V_{SP} + V_{TOL} \leq V_{ME} \leq V_{SP} + V_{TOL} + V_{FR}^{(1)}$, (i) ist ein Ausgangswert des vierten Zielfunktionsterms bei Lieferung von Blindleistung an das Höchstspannungsnetz im Wesentlichen unabhängig von der an das Höchstspannungsnetz gelieferten Blindleistung und entspricht der Ausgangswert im Wesentlichen dem Wert Null und (ii) sinkt mit zunehmendem Bezug von Blindleistung aus dem Höchstspannungsnetz ein Ausgangswert des vierten Zielfunktionsterms mit dem ersten Koeffizienten $C^{(1)}$ linear mit der bezogenen Blindleistung; und

- Falls der Spannungsmesswert $V_{ME}$ grösser ist als die Summe aus dem Spannungssollwert $V_{SP}$, dem Spannungstoleranzwert $V_{TOL}$ und dem ersten Spannungsfreiwert $V_{FR}^{(1)}$, das heisst $V_{ME} >$

$$V_{SP} + V_{TOL} + V_{FR}^{(1)}$$

, (i) steigt mit zunehmender Lieferung von Blindleistung an das Höchstspannungsnetz ein Ausgangswert des vierten Zielfunktionsterms mit dem zweiten Koeffizienten $C^{(2)}$ linear mit der gelieferten Blindleistung und (ii) sinkt mit zunehmendem Bezug von Blindleistung aus dem Höchstspannungsnetz ein Ausgangswert des vierten Zielfunktionsterms mit dem ersten Koeffizienten $C^{(1)}$ linear mit der bezogenen Blindleistung.

Der Begriff Bezug bedeutet, dass Blindleistung aus dem Höchstspannungsnetz in das Mittel- oder Hochspannungsnetz fliesst, und der Begriff Lieferung bedeutet, dass Blindleistung aus dem Mittel- oder Hochspannungsnetz in das Höchstspannungsnetz fliesst.

In einer weiteren Ausführungsform des erfindungsgemässen Verfahrens ist für einen halbaktiven Ausspeisepunkt der fünfte Zielfunktionsterm für an dem halbaktiven Ausspeisepunkt vorliegende Blindleistung wie folgt ausgebildet:

- Falls der Spannungsmesswert $V_{ME}$ kleiner ist als die Differenz zwischen dem Spannungssollwert $V_{SP}$ als Minuend und einem zweiten Spannungsfreiwert $V_{FR}^{(2)}$ als Subtrahend, das heisst

$$V_{ME} < V_{SP} - V_{FR}^{(2)}$$

, a) ist im Falle einer Lieferung von Blindleistung an das Höchstspannungsnetz (i) bis zu einer Blindleistungslieferungsfreigrenze ein Ausgangswert des fünften Zielfunktionsterms im Wesentlichen unabhängig von der an das Höchstspannungsnetz gelieferten Blindleistung und entspricht der Ausgangswert im Wesentlichen dem Wert Null und ist im Falle einer Lieferung von Blindleistung an das Höchstspannungsnetz (ii) über der Blindleistungslieferungsfreigrenze ein Ausgangswert des fünften Zielfunktionsterms so ausgebildet, dass der Ausgangswert mit zunehmender Lieferung von Blindleistung an das Höchstspannungsnetz mit einem dritten Koeffizienten $C^{(3)}$ linear mit der gelieferten Blindleistung sinkt; b) ist im Falle eines Bezugs von Blindleistung aus dem Höchstspannungsnetz (i) bis zu einer Blindleistungsbezugsfreigrenze ein Ausgangswert des fünften Zielfunktionsterms im Wesentlichen unabhängig von der aus dem Höchstspannungsnetz bezogenen Blindleistung und entspricht der Ausgangswert im Wesentlichen dem Wert Null und ist im Falle eines Bezugs von Blindleistung aus dem Höchstspannungsnetz (ii) über der Blindleistungsbezugsfreigrenze ein Ausgangswert des fünften Zielfunktionsterms so ausgebildet, dass der Ausgangswert mit zunehmendem Bezug von Blindleistung aus dem Höchstspannungsnetz mit einem vierten Koeffizienten $C^{(4)}$ linear mit der bezogenen Blindleistung steigt;

- Falls der Spannungsmesswert $V_{ME}$ grösser oder gleich gross ist im Vergleich mit der Differenz zwischen dem Spannungssollwert $V_{SP}$ als Minuend und dem zweiten Spannungsfreiwert $V_{FR}^{(2)}$ als Subtrahend und kleiner oder gleich gross ist im Vergleich zu der Summe aus dem Spannungssollwert $V_{SP}$ und dem zweiten Spannungsfreiwert $V_{FR}^{(2)}$, das heisst

$$V_{SP} - V_{FR}^{(2)} \leq V_{ME} \leq V_{SP} + V_{FR}^{(2)}$$

, ist ein Ausgangswert des fünften Zielfunktionsterms im Wesentlichen unabhängig von der an das Höchstspannungsnetz gelieferten oder aus dem Höchstspannungsnetz bezogenen Blindleistung und entspricht der Ausgangswert im Wesentlichen dem Wert Null; und

- Falls der Spannungsmesswert $V_{ME}$ grösser ist als die Summe aus dem Spannungssollwert $V_{SP}$ und dem zweiten Spannungsfreiwert $V_{FR}^{(2)}$, das heisst

$$V_{ME} > V_{SP} + V_{FR}^{(2)}$$

, a) ist im Falle einer Lieferung von Blindleistung an das Höchstspannungsnetz (i) bis zu der Blindleistungslieferungsfreigrenze ein Ausgangswert des fünften Zielfunktionsterms im Wesentlichen unabhängig von der an das Höchstspannungsnetz gelieferten Blindleistung und entspricht der Ausgangswert im Wesentlichen dem Wert Null und ist im Falle einer Lieferung von Blindleistung an das Höchstspannungsnetz (ii) über der Blindleistungslieferungsfreigrenze ein Ausgangswert des Zielfunktionsterms so ausgebildet, dass der Ausgangswert mit zunehmender Lieferung von Blindleistung an das Höchstspannungsnetz mit dem vierten Koeffizienten $C^{(4)}$ linear mit der gelieferten Blindleistung steigt; b) ist im Falle eines Bezugs von Blindleistung aus dem Höchstspannungsnetz (i) bis zu der Blindleistungsbezugsfreigrenze ein Ausgangswert des fünften Zielfunktionsterms im Wesentlichen unabhängig von der aus dem Höchstspannungsnetz bezogenen Blindleistung und entspricht der Ausgangswert im Wesentlichen dem Wert Null und ist im Falle eines Bezugs von Blindleistung aus dem Höchstspannungsnetz (ii) über der Blindleistungsbezugsfreigrenze ein Ausgangswert des fünften Zielfunktionsterms so ausgebildet, dass der Ausgangswert mit zunehmendem Bezug von Blindleistung aus dem Höchstspannungsnetz mit dem dritten Koeffizienten $C^{(3)}$ linear mit der bezogenen Blindleistung sinkt;

und wobei die Blindleistungslieferungsfreigrenze und die Blindleistungsbezugsfreigrenze insbesondere betragsmässig übereinstimmen und von der Anzahl von Transformatoren, die höchstspannungsnetzseitig an dem halbaktiven Ausspeisepunkt zusammengefasst sind, abhängt.

Die Blindleistungslieferungsfreigrenze und die Blindleistungsbezugsfreigrenze stimmen vorzugsweise betragsmässig überein und werden primär von der Anzahl von Transformatoren, die an dem halbaktiven Ausspeisepunkt anliegen/zusammengefasst sind, bestimmt: $\Delta W_{Q,lim} = \Sigma_i \Delta W_{Q,Trafo,i}$, wobei die Variable i über alle am halbaktiven Ausspeisepunkt anliegenden Transformatoren iteriert, wobei $+\Delta W_{Q,lim}$ der Blindleistungsbezugsfreigrenze und $-\Delta W_{Q,lim}$ der Blindleistungslieferungsfreigrenze entspricht, und wobei die Blindleistungsbezugsfreigrenze/Blindleistungslieferungsfreigrenze eines einzelnen Transformators 'i' $\Delta W_{Q,Trafo,i}$ von der Transformatorkurzschlussspannung und der Nennscheinleistung des Transformators abhängt.

In einer weiteren Ausführungsform des erfindungsgemässen Verfahrens ist der zweite Koeffizient $C^{(2)}$ grösser als der erste Koeffizient $C^{(1)}$ und/oder ist der vierte Koeffizient $C^{(4)}$ grösser als der dritte Koeffizient $C^{(3)}$.

Je nach gewählten numerischen Werten für die vier Koeffizienten können an aktiven beziehungsweise halbaktiven Ausspeisepunkten der Bezug aus dem Höchstspannungsnetz beziehungsweise die Lieferung von Blindenergie an das Höchstspannungsnetz unterschiedlich in der Zielfunktion bewertet werden: falls der zweite Koeffizient grösser ist als der erste Koeffizient und der vierte Koeffizient grösser ist als der dritte Koeffizient, können Blindleistungsflüsse in das Hoch- oder Mittelspannungsnetz im Falle eines Spannungsmesswerts, der hinreichend kleiner ist als der Spannungssollwert, beziehungsweise Blindleistungsflüsse aus dem Hoch- oder Mittelspannungsnetz im Falle eines Spannungsmesswerts, der hinreichend grösser ist als der Spannungssollwert, algorithmisch besser unterdrückt werden; dies, da Blindleistungsflüsse, die bei zu tiefer Spannung die Spannung am Ausspeiseknoten weiter absenken und die bei zu hoher Spannung die Spannung am Ausspeiseknoten weiter erhöhen, durch den Koeffizienten $C^{(2)}$ beziehungsweise den Koeffizienten $C^{(4)}$ einen schnell anwachsenden Ausgangswert des entsprechenden Zielfunktionsterms bewirken.

In einer weiteren Ausführungsform des erfindungsgemässen Verfahrens ist ein Ausgangswert des zweiten Zielfunktionsterms für von dem mindestens einen Generator an das Hoch- oder Mittelspannungsnetz gelieferte oder bezogene Blindleistung wie folgt ausgebildet: (i) für gelieferte Blindleistung steigt der Ausgangswert mit einem fünften Koeffizienten linear mit zunehmender Lieferung von Blindleistung und (ii) steigt der Ausgangswert für bezogene Blindleistung mit einem sechsten Koeffizienten linear mit zunehmendem Bezug von Blindleistung, und/oder steigt ein Ausgangswert des ersten Zielfunktionsterms für Netzwirkleistungsverluste mit einem siebten Koeffizienten linear mit zunehmenden Netzwirkleistungsverlusten.

In einer weiteren Ausführungsform des erfindungsgemässen Verfahrens werden die Schritte a) bis e) des Verfahrens wiederholt ausgeführt, wobei nach dem Schritt e) des Einstellens insbesondere die Schritte a), c) und d) und daraufhin erneut Schritt e) ausgeführt wird, wobei eine Wiederholung insbesondere zu periodisch verteilten fixen Zeitpunkten oder nach einer, in Bezug auf einen Spannungsschwellwert, hinreichenden Änderung des Spannungsmesswerts oder nach einer topologischen Änderung des Mittel- oder Hochspannungsnetzes ausgeführt wird.

Das erfindungsgemässe Verfahren kann Teil eines geschlossenen Regelkreises zur Spannungshaltung sein und wiederholt ausgeführt werden. Der geschlossene Regelkreis kann dabei wie folgt aufgebaut sein: nach der Bestimmung der Steuergrössen und der entsprechenden Einstellung im Stromnetz können nach einer bestimmten Zeit neue Spannungsmesswerte bestimmt und eventuell auch neue Spannungssollwerte und Zustandsdaten erhalten werden, wobei anschliessend wieder die Steuergrössen optimiert werden. Ein separater Regelkreis kann zur Frequenzhaltung, wobei wie bereits zuvor erwähnt das erfindungsgemässe Verfahren auch Wirkleistungsflüsse zur Frequenzhaltung bestimmen kann, verwendet werden, und Generatoreinspeisungen können separat durch einen Marktmechanismus bestimmt werden.

Der geschlossene Regelkreis kann eine Filterfunktion aufweisen. Nach der erneuten Optimierung der Steuergrössen können die neu optimierten Steuergrössen mit den zuvor im Rahmen einer vorherigen Optimierung bestimmten Steuergrössen verglichen werden. Falls beispielsweise zu grosse Änderungen zwischen den neu optimierten Steuergrössen und den zuvor optimierten Steuergrössen detektiert werden, kann auf ein erneutes Einstellen der neu optimierten Steuergrössen verzichtet werden. Vorteilhafterweise können hierdurch zu schnelle Wechsel im Mittel- oder Hochspannungsnetz vermieden werden. Die Filterfunktion kann auch eine Mehrzahl von zuvor optimierten Steuergrössen bei der Überprüfung der neu optimierten Steuergrösse verwenden: beispielsweise können die zuvor zu Zeitpunkten i-n, i-n+1, ..., i-1 bestimmten Steuergrössen mit den zum Zeitpunkt i neu bestimmten Steuergrössen verglichen werden, um zum Beispiel Rauschen in den neu bestimmten Steuergrössen entdecken zu können. Die verwendete Filterfunktion kann einen Tiefpasscharakter aufweisen.

Gemäss einem zweiten Aspekt der Erfindung betrifft die Erfindung eine Recheneinheit, die eine Eingangsschnittstelle und eine Ausgangsschnittstelle aufweist, wobei die Recheneinheit dazu ausgebildet ist, das Verfahren gemäss dem ersten Aspekt der Erfindung auszuführen.

Über die Eingangsschnittstelle können Spannungsmesswerte, Spannungssollwerte und Zustandsdaten erhalten werden. Über die Ausgangsschnittstelle können die bestimmten Steuergrössen ausgegeben werden.

Gemäss einem dritten Aspekt der Erfindung betrifft die Erfindung ein Computerprogrammprodukt, welches Instruktionen aufweist, die, auf der Recheneinheit gemäss dem zweiten Aspekt der Erfindung ausgeführt, das Verfahren gemäss dem ersten Aspekt der Erfindung ausführen.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen:

Fig. 1 zeigt ein schematisches Beispiel eines Höchstspannungsnetzes, das über zwei Ausspeisepunkte mit einem Hochspannungsnetz verbunden ist;

Fig. 2 zeigt eine schematische Ansicht eines wiederholten Ausführens des erfindungsgemässen Verfahrens;

Fig. 3 zeigt Zielfunktionsterme für Netzwirkleistungsverluste und für von einem Generator bezogene oder gelieferte Blindenergie;

Fig. 4 zeigt einen Zielfunktionsterm für einen aktiven Ausspeisepunkt; und

Fig. 5 zeigt einen Zielfunktionsterm für einen halbaktiven Ausspeisepunkt.

Grundsätzlich sind in den Figuren gleiche Teile mit gleichen Bezugszeichen versehen.

**Wege zur Ausführung der Erfindung**

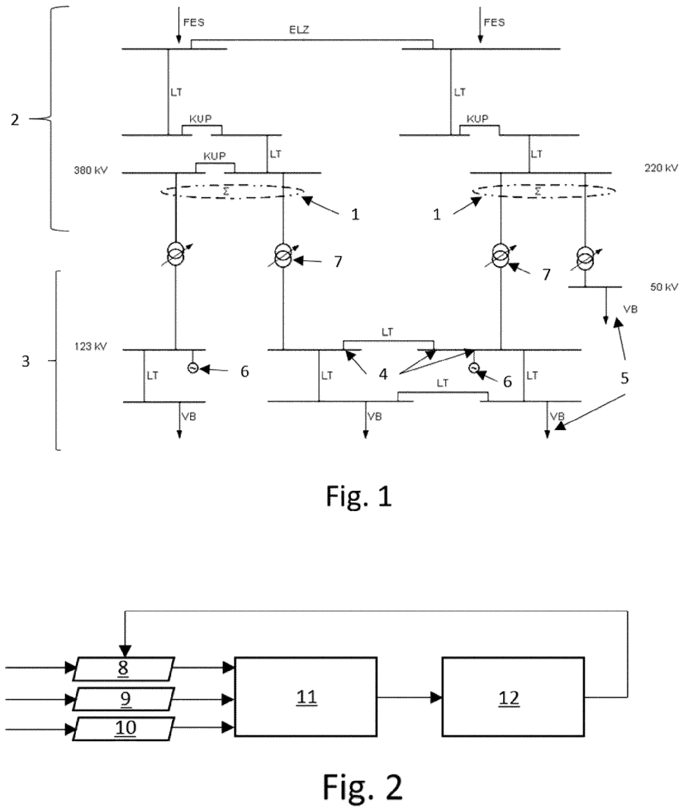

**Fig. 1** zeigt ein schematisches Beispiel eines Höchstspannungsnetzes 2, das über zwei Ausspeisepunkte 1 mit einem Hochspannungsnetz 3 verbunden ist. Im in Fig. 1 dargestellten Beispiel kann das Höchstspannungsnetz 2 als aus einem Fremdnetz und einem Fremdnahnetz bestehend angesehen werden, wobei das Fremdnetz durch Fremdeinspeisungen FES in das Fremdnahnetz modelliert wird. Im Beispiel von Fig. 1 weist das Höchstspannungsnetz 2 zwei Spannungsebenen auf, und zwar 220 kV und 380 kV. Das Fremdnetz kann weiterhin durch Ersatzlängszweige ELZ modelliert werden. Ein Betreiber des in Fig. 1 gezeigten Hochspannungsnetzes 3 kann über Informationen betreffend Schaltzustände, Transformatorstufen und Messwerte sowohl im Hochspannungsnetz 3 als auch im Fremdnahnetz verfügen, insbesondere über P-Messwerte und Q-Messwerte, d.h. Wirkleistungsmessungen und Blindleistungsmessungen. Das in Fig. 1 gezeigte Hochspannungsnetz 3 weist zwei Spannungsebenen auf, und zwar 123 kV und 50 kV.

Das Stromnetz weist als Verbindung zwischen Knoten 4 Leitungen LT auf, wobei die Leitungen zum Beispiel als Freileitungen oder Kabel ausgebildet sein können. Das in Fig. 1 gezeigte Beispiel weist Transformatoren 7 auf, die das Hochspannungsnetz 3 mit dem Höchstspannungsnetz 2 verbinden. Das Höchstspannungsnetz 2 verfügt zusätzlich auch noch über Kupplungen KUP.

Generatoren 6 können direkt in das Hochspannungsnetz 3 einspeisen. Daneben können Lasten 5 in Form von Verbrauchern VB an das Hochspannungsnetz 3 angeschlossen werden. Ein elektrischer Zustand des Hochspannungsnetzes 3 wird im Allgemeinen von dem Höchstspannungsnetz 2, der Topologie des Hochspannungsnetzes 3 und der angeschlossenen Generatoren 6 und Lasten 5 bestimmt. Ein elektrischer Zustand des Hochspannungsnetzes 3 kann, sofern die Topologie des Hochspannungsnetzes 3, die an das Hochspannungsnetz 3 angeschlossenen Generatoren 6 und Lasten 5 und die Verbindung zum Höchstspannungsnetz 2 zumindest teilweise bekannt sind, beispielsweise mittels Lastflussgleichungen bestimmt werden.

Das Hochspannungsnetz 3 kann im Allgemeinen komplizierte Topologien aufweisen, insbesondere stark vermaschte Leitungssysteme, wohingegen das Höchstspannungsnetz 2 im Allgemeinen im Vergleich zum Hochspannungsnetz 3 einfachere Topologien aufweisen kann.

**Fig. 2** zeigt eine schematische Ansicht eines wiederholten Ausführens des erfindungsgemässen Verfahrens. Das Verfahren weist ein Empfangen 8 von Spannungsmesswerten 8, die an Ausspeisepunkten aufgezeichnet werden, sowie ein Empfangen 9 von Spannungssollwerten, die an den Ausspeisepunkten erwünscht sind, auf. Das Verfahren weist auch ein Empfangen 10 von Zustandsdaten auf, die ermöglichen, einen elektrischen Zustand eines Stromnetzes zu bestimmen, insbesondere mittels einer Lastflussberechnung. Basierend auf den empfangenen Spannungsmesswerten, Spannungssolldaten und Zustandsdaten werden in einem nächsten Schritt 11 Steuergrössen bestimmt, deren Änderung Einfluss hat auf Blindleistungsflüsse aus dem Mittel- oder Hochspannungsnetz in das Höchstspannungsnetz beziehungsweise aus dem Höchstspannungsnetz in das Mittel- oder Hochspannungsnetz. Über Änderungen der Steuergrössen, die Blindleistungskompensationslagen, Generatoren oder Stufenschalter von Transformatoren zumindest teilweise beeinflussen können, kann somit eine Spannungshaltung an den Ausspeisepunkten unterstützt werden. Die bestimmten Steuergrössen werden in einem nächsten Schritt 12 eingestellt, wodurch sich Leistungsflüsse im Mittel- oder Hochspannungsnetz und im Höchstspannungsnetz ändern können.

Nach einer gewissen Zeit, beispielsweise 15 Minuten oder in anderen Zeitintervallen, kann eine neue Messung von Spannungsmesswerten durchgeführt werden, wobei nach dem erneuten Empfangen 8 von Spannungsmesswerten wieder eine erneute Bestimmung 11 von Steuergrössen durchgeführt werden kann. Zur Bestimmung 11 der neuen Steuergrössen können auch neue Spannungssollwerte und/oder neue Zustandsdaten empfangen werden, letzteres insbesondere im Falle einer topologischen Änderung des Stromnetzes oder im Falle einer veränderten Lastsituation.

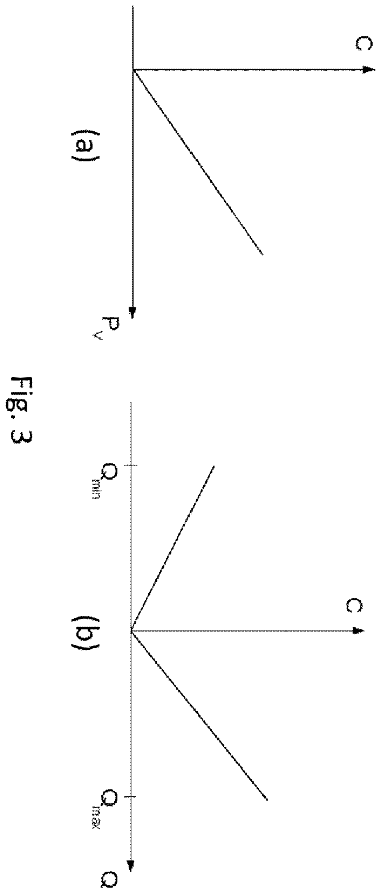

**Fig. 3a** zeigt einen Zielfunktionsterm für Netzwirkleistungsverluste, und **Fig. 3b** einen Zielfunktionsterm für von einem Generator bezogene oder gelieferte Blindenergie. Der Zielfunktionsterm für Netzwerkleistungsverluste Pv ist dabei so ausgebildet, dass ein Ausgangswert des Zielfunktionsterms linear mit zunehmenden Netzwirkleistungsverlusten ansteigt. Der in Fig. 3b gezeigte Zielfunktionsterm für Generatoren entspricht für positive Blindleistungen Q einem übererregten Betrieb des Generators und für negative Blindleistungen Q einem untererregten Betrieb des Generators, wobei der Zielfunktionsterm sowohl mit zunehmendem übererregten Betrieb als auch mit zunehmendem untererregten Betrieb linear ansteigt, wobei sich die Linearkoeffizienten voneinander unterscheiden können. $Q_{min}$ und $Q_{max}$ können aus einem Generatorbetriebsdiagramm bestimmt werden, wobei diese zwei Grössen insbesondere von einem Arbeitspunkt des Generators abhängig sind.

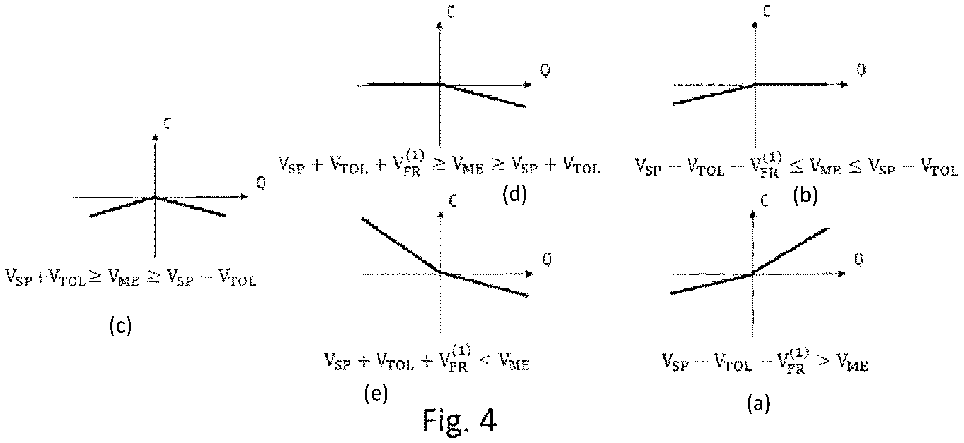

**Fig. 4** zeigt einen Zielfunktionsterm für einen aktiven Ausspeisepunkt. Der Zielfunktionsterm weist dabei fünf Bereiche auf: falls der Spannungsmesswert $V_{ME}$ kleiner ist als $V_{SP} - V_{TOL} - V_{FR}^{(1)}$ (Fig. 4a), steigt ein Ausgangswert mit zunehmendem Bezug (positive Werte von Q in Fig. 4) von Blindenergie aus dem Höchstspannungsnetz in das Mittel- oder Hochspannungsnetz linear an und sinkt der Ausgangswert mit zunehmender Lieferung von Blindenergie aus dem Mittel- oder Hochspannungsnetz in das Höchstspannungsnetz ebenfalls linear; falls der Spannungsmesswert $V_{ME}$ grösser oder gleich $V_{SP} - V_{TOL} - V_{FR}^{(1)}$ ist und kleiner oder gleich $V_{SP} - V_{TOL}$ ist (Fig. 4b), ist der Ausgangswert des Zielfunktionsterms für einen Bezug von Blindenergie im Wesentlichen Null (eine kleine positive Steigung kann aus numerischen Gründen verwendet werden) und sinkt der Ausgangswert des Zielfunktionsterms mit zunehmender Lieferung von Blindenergie linear; falls der Spannungsmesswert $V_{ME}$ grösser oder gleich $V_{SP} - V_{TOL}$ ist und kleiner oder gleich $V_{SP} + V_{TOL}$ ist (Fig. 4c), sinkt der Ausgangswert des Zielfunktionsterms sowohl mit zunehmendem Bezug als auch mit zunehmender Lieferung von Blindenergie; falls der Spannungsmesswert $V_{ME}$ grösser oder gleich $V_{SP} + V_{TOL}$ und kleiner oder gleich $V_{SP} + V_{TOL} + V_{FR}^{(1)}$ ist (Fig. 4d), ist der Ausgangswert des Zielfunktionsterms für eine Lieferung von Blindenergie im Wesentlichen Null (eine kleine Steigung kann aus numerischen Gründen verwendet werden) und sinkt der Ausgangswert mit zunehmendem Bezug von Blindenergie linear; und falls der Spannungsmesswert $V_{ME}$ grösser ist als $V_{SP} + V_{TOL} + V_{FR}^{(1)}$ (Fig. 4e), steigt der Ausgangswert mit zunehmender Lieferung von Blindenergie linear an und sinkt der Ausgangswert mit zunehmendem Bezug von Blindenergie linear.

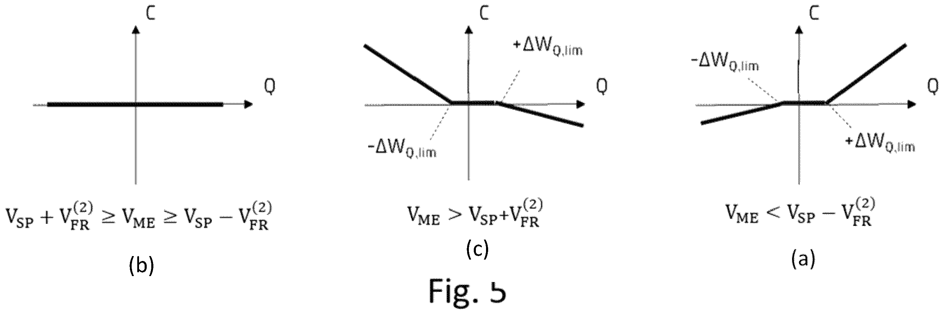

**Fig. 5** zeigt einen Zielfunktionsterm für einen halbaktiven Ausspeisepunkt. Der Zielfunktionsterm weist dabei drei Bereiche auf: falls der Spannungsmesswert $V_{ME}$ kleiner ist als $V_{SP} - V_{FR}^{(2)}$ (Fig. 5a), ist der Ausgangswert des Zielfunktionsterms bis zu einem Bezug/einer Lieferung von Blindenergie von $\pm\Delta W_{Q,lim}$ im Wesentlichen gleich Null (eine kleine Steigung kann aus numerischen Gründen verwendet werden) und steigt beziehungsweise sinkt der Ausgangswert bei grösserem Bezug/grösserer Lieferung linear; falls der Spannungsmesswert $V_{ME}$ grösser oder gleich $V_{SP} - V_{FR}^{(2)}$ ist und kleiner oder gleich $V_{SP} + V_{FR}^{(2)}$ (Fig. 5b), ist der Ausgangswert im Wesentlichen Null; und falls der Spannungswert $V_{ME}$ grösser ist als $V_{SP} + V_{FR}^{(2)}$ (Fig. 5c), ist der Ausgangswert des Zielfunktionsterms bis zu einem Bezug/einer Lieferung von Blindenergie von $\pm\Delta W_{Q,lim}$ im Wesentlichen gleich Null (eine kleine Steigung kann aus numerischen Gründen verwendet werden) und steigt beziehungsweise sinkt der Ausgangswert bei grösserer Lieferung/grösserem Bezug von Blindenergie linear.

Allgemein können anstelle der spezifischen in Fig. 4 und Fig. 5 angegebenen Zielfunktionsterme, die abschnittsweise linear ausgebildet sind, auch abgewandelte Zielfunktionsterme verwendet werden, beispielsweise abschnittsweise quadratisch ausgebildete Zielfunktionsterme, oder Zielfunktionsterme, die abschnittsweise Terme höherer Ordnung aufweisen, oder allgemeinere Zielfunktionsterme, die nicht abschnittsweise, sondern global definiert werden. Allgemein sollten die Zielfunktionsterme jedoch so beschaffen sein, dass sie einer, insbesondere numerischen, Minimierung/Maximierung zugänglich sind. Für die Beschaffenheit der Zielfunktionsterme kann primär wichtig sein, dass sie die Lieferung/den Bezug von Blindleistung im Wesentlichen analog zu Fig. 4 und Fig. 5 abbilden.

**Patentansprüche**

1. Verfahren zum Steuern von Blindleistungsflüssen zwecks Spannungshaltung an mindestens einem Ausspeisepunkt (1) zwischen einerseits einem Höchstspannungsnetz (2) und andererseits einem Mittel- oder Hochspannungsnetz (3), wobei das Mittel- oder Hochspannungsnetz (3) eine Vielzahl von Knoten (4) aufweist, wobei an der Vielzahl von Knoten (4) mindestens ein Generator (6) und eine Vielzahl von Lasten (5) angeschlossen sind, wobei das Höchstspannungsnetz (2) und das Mittel- oder Hochspannungsnetz (3) durch mindestens einen Transformator (7) verbunden sind, und wobei das Verfahren die folgenden Schritte aufweist:

a) Empfangen (8) eines höchstspannungsnetzseitigen Spannungsmesswerts $V_{ME}$ an dem mindestens einen Ausspeisepunkt (1);
b) Empfangen (9) eines höchstspannungsnetzseitigen Spannungssollwerts $V_{SP}$ an dem mindestens einen Ausspeisepunkt (1);
c) Empfangen (10) von Zustandsdaten in Bezug auf Einspeisungen in das Mittel- oder Hochspannungsnetz (3) über mindestens einen Einspeiseknoten in der Vielzahl von Knoten (4) und in Bezug auf an die Vielzahl von Knoten (4) angeschlossenen Lasten (5);
d) Bestimmen (11) von mindestens einer Stellgrösse in Bezug auf einen Stufenschalter eines Transformators des mindestens einen Transformators (7), und/oder in Bezug auf einen Blindleistungsregler eines Generators des mindestens einen Generators (6), der mit dem mindestens einen Einspeiseknoten verbunden ist, und/oder in Bezug auf eine Blindleistungskompensationsanlage im Mittel- oder Hochspannungsnetz (3), wobei die mindestens eine Stellgrösse durch eine Minimierung oder Maximierung einer von dem höchstspannungsnetzseitigen Spannungsmesswert $V_{ME}$ und dem höchstspannungsnetzseitigen Spannungssollwert $V_{SP}$ abhängigen Zielfunktion bestimmt wird, und wobei die Minimierung oder Maximierung der Zielfunktion mindestens eine Nebenbedingung aufweist, wobei eine erste Nebenbedingung der mindestens einen Nebenbedingung in Form von mit den empfangenen Zustandsdaten parametrisierten Lastflussgleichungen vorliegt; und
e) Einstellen (12) des Stufenschalters des Transformators und/oder Einstellen des Blindleistungsreglers des Generators und/oder Einstellen der Blindleistungskompensationsanlage basierend auf der bestimmten mindestens einen Stellgrösse.

2. Verfahren gemäss Anspruch 1, wobei an dem mindestens einen Ausspeisepunkt (1) einer oder mehrere Transformatoren des mindestens einen Transformators (7) an der an das Höchstspannungsnetz (2) angrenzenden Seite des einen oder der mehreren Transformatoren anliegen, insbesondere wobei der eine oder mehrere Transformatoren als Kuppeltransformatoren ausgebildet sind, und wobei der mindestens eine Ausspeisepunkt (1) als aktiver Ausspeisepunkt oder als halbaktiver Ausspeisepunkt ausgebildet ist.

3. Verfahren gemäss Anspruch 2, wobei die Zielfunktion als gewichtete Summe mindestens folgender Terme ausgebildet ist: 1) ein erster Zielfunktionsterm für Netzwirkleistungsverluste; 2) ein zweiter Zielfunktionsterm für von dem mindestens einen Generator gelieferte oder bezogene Blindleistung; 3) ein dritter Zielfunktionsterm für von der Blindleistungskompensationsanlage gelieferte oder bezogene Blindleistung; 4) ein vierter Zielfunktionsterm für an einem aktiven Ausspeisepunkt vorliegende Blindleistung; und 5) ein fünfter Zielfunktionsterm für an einem halbaktiven Ausspeisepunkt vorliegende Blindleistung.

4. Verfahren gemäss einem der vorherigen Ansprüche, wobei die mindestens eine Nebenbedingung als weitere Nebenbedingung einen maximalen Scheinleistungsfluss über eine Leitung zwischen zwei Knoten der Vielzahl von Knoten (4) aufweist, und/oder wobei die mindestens eine Nebenbedingung als weitere Nebenbedingung einen minimalen oder maximalen Spannungsbetrag an einem Knoten der Vielzahl von Knoten (4) aufweist, und/oder wobei die mindestens eine Nebenbedingung als weitere Nebenbedingung ein von einem Arbeitspunkt des mindestens einen Generators (6) abhängiges Blindleistungsband aufweist, in dem der Generator Blindleistung ohne Beeinträchtigung der vom Generator produzierten Wirkleistung liefern oder beziehen kann, und/oder wobei die mindestens eine Nebenbedingung als weitere Nebenbedingung ein von einem Arbeitspunkt der Blindleistungskompensationsanlage abhängiges Blindleistungsband aufweist, in dem die Blindleistungskompensationsanlage Blindleistung liefern oder beziehen kann.

5. Verfahren gemäss einem der Ansprüche 3 oder 4, wobei die Stellgrössen mittels einer Minimierung der Zielfunktion bestimmt werden, und wobei für einen aktiven Ausspeisepunkt der vierte Zielfunktionsterm für an dem aktiven Ausspeisepunkt vorliegende Blindleistung wie folgt ausgebildet ist:

• Falls der Spannungsmesswert $V_{ME}$ kleiner ist als die Differenz zwischen dem Spannungssollwert $V_{SP}$ als Minuend und als Subtrahend der Summe aus einem Spannungstoleranzwert $V_{TOL}$ und einem ersten Spannungsfreiwert $V_{FR}^{(1)}$, das heisst $V_{ME} < V_{SP} - V_{TOL} - V_{FR}^{(1)}$, (i) sinkt mit zunehmender Lieferung von Blindleistung an das Höchstspannungsnetz (2) ein Ausgangswert des vierten Zielfunktionsterms mit einem ersten Koeffizienten $C^{(1)}$ linear mit der gelieferten Blindleistung und (ii) steigt mit zunehmendem Bezug von Blindleistung aus dem Höchstspannungsnetz (2) ein Ausgangswert des vierten Zielfunktionsterms mit einem zweiten Koeffizienten $C^{(2)}$ linear mit der bezogenen Blindleistung;

• Falls der Spannungsmesswert $V_{ME}$ a) grösser oder gleich gross ist im Vergleich mit der Differenz zwischen dem Spannungssollwert $V_{SP}$ als Minuend und als Subtrahend der Summe aus dem Spannungstoleranzwert $V_{TOL}$ und dem ersten Spannungsfreiwert $V_{FR}^{(1)}$ und b) kleiner oder gleich gross ist im Vergleich mit der Differenz zwischen dem Spannungssollwert $V_{SP}$ als Minuend und dem Spannungstoleranzwert $V_{TOL}$ als Subtrahend, das heisst $V_{SP} - V_{TOL} - V_{FR}^{(1)} \leq V_{ME} \leq V_{SP} - V_{TOL}$, (i) sinkt mit zunehmender Lieferung von Blindleistung an das Höchstspannungsnetz (2) ein Ausgangswert des vierten Zielfunktionsterms mit dem ersten Koeffizienten $C^{(1)}$ linear mit der gelieferten Blindleistung und (ii) ist ein Ausgangswert des vierten Zielfunktionsterms bei Bezug von Blindleistung aus dem Höchstspannungsnetz (2) im Wesentlichen unabhängig von der aus dem Höchstspannungsnetz (2) bezogenen Blindleistung und entspricht der Ausgangswert im Wesentlichen dem Wert Null;

• Falls der Spannungsmesswert $V_{ME}$ a) grösser oder gleich gross ist im Vergleich mit der Differenz zwischen dem Spannungssollwert $V_{SP}$ als Minuend und dem Spannungstoleranzwert $V_{TOL}$ als Subtrahend und b) kleiner oder gleich gross ist im Vergleich mit der Summe aus dem Spannungssollwert $V_{SP}$ und dem Spannungstoleranzwert $V_{TOL}$, das heisst $V_{SP} - V_{TOL} \leq V_{ME} \leq V_{SP} + V_{TOL}$, (i) sinkt mit zunehmender Lieferung von Blindleistung an das Höchstspannungsnetz (2) ein Ausgangswert des vierten Zielfunktionsterms mit dem ersten Koeffizienten $C^{(1)}$ linear mit der gelieferten Blindleistung und (ii) sinkt mit zunehmendem Bezug von Blindleistung aus dem Höchstspannungsnetz (2) ein Ausgangswert des vierten Zielfunktionsterms mit dem ersten Koeffizienten $C^{(1)}$ linear mit der bezogenen Blindleistung;

• Falls der Spannungsmesswert $V_{ME}$ a) grösser oder gleich gross ist im Vergleich mit der Summe aus dem Spannungssollwert $V_{SP}$ und dem Spannungstoleranzwert $V_{TOL}$ und b) kleiner oder gleich gross ist im Vergleich mit der Summe aus dem Spannungssollwert $V_{SP}$, dem Spannungstoleranzwert $V_{TOL}$ und dem ersten Spannungsfreiwert $V_{FR}^{(1)}$, das heisst $V_{SP} + V_{TOL} \leq V_{ME} \leq V_{SP} + V_{TOL} + V_{FR}^{(1)}$, (i) ist ein Ausgangswert des vierten Zielfunktionsterms bei Lieferung von Blindleistung an das Höchstspannungsnetz (2) im Wesentlichen unabhängig von der an das Höchstspannungsnetz (2) gelieferten Blindleistung und entspricht der Ausgangswert im Wesentlichen dem Wert Null und (ii) sinkt mit zunehmendem Bezug von Blindleistung aus dem Höchstspannungsnetz (2) ein Ausgangswert des vierten Zielfunktionsterms mit dem ersten Koeffizienten $C^{(1)}$ linear mit der bezogenen Blindleistung; und

• Falls der Spannungsmesswert $V_{ME}$ grösser ist als die Summe aus dem Spannungssollwert $V_{SP}$, dem Spannungstoleranzwert $V_{TOL}$ und dem ersten Spannungsfreiwert $V_{FR}^{(1)}$, das heisst $V_{ME} > V_{SP} + V_{TOL} + V_{FR}^{(1)}$, (i) steigt mit zunehmender Lieferung von Blindleistung an das Höchstspannungsnetz (2) ein Ausgangswert des vierten Zielfunktionsterms mit dem zweiten Koeffizienten $C^{(2)}$ linear mit der gelieferten Blindleistung und (ii) sinkt mit zunehmendem Bezug von Blindleistung aus dem Höchstspannungsnetz (2) ein Ausgangswert des vierten Zielfunktionsterms mit dem ersten Koeffizienten $C^{(1)}$ linear mit der bezogenen Blindleistung.

6. Verfahren gemäss einem der Ansprüche 3 bis 5, wobei für einen halbaktiven Ausspeisepunkt der fünfte Zielfunktionsterm für an dem halbaktiven Ausspeisepunkt vorliegende Blindleistung wie folgt ausgebildet ist:

• Falls der Spannungsmesswert $V_{ME}$ kleiner ist als die Differenz zwischen dem Spannungssollwert $V_{SP}$ als Minuend und einem zweiten Spannungsfreiwert $V_{FR}^{(2)}$ als Subtrahend, das heisst $V_{ME} < V_{SP} - V_{FR}^{(2)}$, a) ist im Falle einer Lieferung von Blindleistung an das Höchstspannungsnetz (2) (i) bis zu einer Blindleistungslieferungsfreigrenze ein Ausgangswert des fünften Zielfunktionsterms im Wesentlichen unabhängig von der an das Höchstspannungsnetz (2) gelieferten Blindleistung und entspricht der Ausgangswert im Wesentlichen dem Wert Null und ist im Falle einer Lieferung von Blindleistung an das Höchstspannungsnetz (2) (ii) über der Blindleistungslieferungsfreigrenze ein Ausgangswert des fünften Zielfunktionsterms so ausgebildet, dass der Ausgangswert mit zunehmender Lieferung von Blindleistung an das Höchstspannungsnetz (2) mit einem dritten Koeffizienten $C^{(3)}$ linear mit der gelieferten Blindleistung sinkt; b) ist im Falle eines Bezugs von Blindleistung aus dem Höchstspannungsnetz (2) (i) bis zu einer Blindleistungsbezugsfreigrenze ein Ausgangswert des fünften Zielfunktionsterms im Wesentlichen unabhängig von der aus dem Höchstspannungsnetz (2) bezogenen Blindleistung und entspricht der Ausgangswert im Wesentlichen dem Wert Null und ist im Falle eines Bezugs von Blindleistung aus dem Höchstspannungsnetz (2) (ii) über der Blindleistungsbezugsfreigrenze ein Ausgangswert des fünften Zielfunktionsterms so ausgebildet, dass der Ausgangswert mit zunehmendem Bezug von Blindleistung aus dem Höchstspannungsnetz (2) mit einem vierten Koeffizienten $C^{(4)}$ linear mit der bezogenen Blindleistung steigt;

• Falls der Spannungsmesswert $V_{ME}$ grösser oder gleich gross ist im Vergleich mit der Differenz zwischen dem Spannungssollwert $V_{SP}$ als Minuend und dem zweiten Spannungsfreiwert

$$V_{FR}^{(2)}$$

als Subtrahend und kleiner oder gleich gross ist im Vergleich zu der Summe aus dem Spannungssollwert $V_{SP}$ und dem zweiten Spannungsfreiwert

$$V_{FR}^{(2)}$$, das heisst

$$V_{SP} - V_{FR}^{(2)} \leq V_{ME} \leq V_{SP} + V_{FR}^{(2)}$$, ist ein

Ausgangswert des fünften Zielfunktionsterms im Wesentlichen unabhängig von der an das Höchstspannungsnetz (2) gelieferten oder aus dem Höchstspannungsnetz (2) bezogenen Blindleistung und entspricht der Ausgangswert im Wesentlichen dem Wert Null; und

• Falls der Spannungsmesswert $V_{ME}$ grösser ist als die Summe aus dem Spannungssollwert $V_{SP}$ und dem zweiten Spannungsfreiwert $V_{FR}^{(2)}$, das

heisst $V_{ME} > V_{SP} + V_{FR}^{(2)}$, a) ist im Falle einer Lieferung von Blindleistung an das Höchstspannungsnetz (2) (i) bis zu der Blindleistungslieferungsfreigrenze ein Ausgangswert des fünften Zielfunktionsterms im Wesentlichen unabhängig von der an das Höchstspannungsnetz (2) gelieferten Blindleistung und entspricht der Ausgangswert im Wesentlichen dem Wert Null und ist im Falle einer Lieferung von Blindleistung an das Höchstspannungsnetz (2) (ii) über der Blindleistungslieferungsfreigrenze ein Ausgangswert des Zielfunktionsterms so ausgebildet, dass der Ausgangswert mit zunehmender Lieferung von Blindleistung an das Höchstspannungsnetz (2) mit dem vierten Koeffizienten $C^{(4)}$ linear mit der gelieferten Blindleistung steigt; b) ist im Falle eines Bezugs von Blindleistung aus dem Höchstspannungsnetz (2) (i) bis zu der Blindleistungsbezugsfreigrenze ein Ausgangswert des fünften Zielfunktionsterms im Wesentlichen unabhängig von der aus dem Höchstspannungsnetz (2) bezogenen Blindleistung und entspricht der Ausgangswert im Wesentlichen dem Wert Null und ist im Falle eines Bezugs von Blindleistung aus dem Höchstspannungsnetz (2) (ii) über der Blindleistungsbezugsfreigrenze ein Ausgangswert des fünften Zielfunktionsterms so ausgebildet, dass der Ausgangswert mit zunehmendem Bezug von Blindleistung aus dem Höchstspannungsnetz (2) mit dem dritten Koeffizienten $C^{(3)}$ linear mit der bezogenen Blindleistung sinkt;

und wobei die Blindleistungslieferungsfreigrenze und die Blindleistungsbezugsfreigrenze insbesondere betragsmässig übereinstimmen und von der Anzahl von Transformatoren, die höchstspannungsnetzseitig an dem halbaktiven Ausspeisepunkt zusammengefasst sind, abhängt.

**7.** Verfahren gemäss Anspruch 5 oder 6, wobei der zweite Koeffizient $C^{(2)}$ grösser ist als der erste Koeffizient $C^{(1)}$ und/oder wobei der vierte Koeffizient $C^{(4)}$ grösser ist als der dritte Koeffizient $C^{(3)}$.

**8.** Verfahren gemäss einem der Ansprüche 3 bis 7, wobei ein Ausgangswert des zweiten Zielfunktionsterms für von dem mindestens einen Generator (6) an das Hoch- oder Mittelspannungsnetz (3) gelieferte oder bezogene Blindleistung (i) für gelieferte Blindleistung mit einem fünften Koeffizienten linear mit zunehmender Lieferung von Blindleistung steigt und (ii) für bezogene Blindleistung mit einem sechsten Koeffizienten linear mit zunehmendem Bezug von Blindleistung steigt, und/oder wobei ein Ausgangswert des ersten Zielfunktionsterms für Netzwirkleistungsverluste mit einem siebten Koeffizienten linear mit zunehmenden Netzwirkleistungsverlusten steigt.

**9.** Verfahren gemäss einem der vorherigen Ansprüche, wobei die Schritte a) bis e) des Verfahrens wiederholt ausgeführt werden, wobei nach dem Schritt e) des Einstellens (12) insbesondere die Schritte a), c) und d) und daraufhin erneut Schritt e) ausgeführt wird, wobei eine Wiederholung insbesondere zu periodisch verteilten fixen Zeitpunkten oder nach einer, in Bezug auf einen Spannungsschwellwert, hinreichenden Änderung des Spannungsmesswerts oder nach einer topologischen Änderung des Mittel- oder Hochspannungsnetzes ausgeführt wird.

**10.** Recheneinheit, aufweisend eine Eingangsschnittstelle und eine Ausgangsschnittstelle, wobei die Recheneinheit dazu ausgebildet ist, das Verfahren gemäss einem der Ansprüche 1 bis 9 auszuführen.

**11.** Computerprogrammprodukt, aufweisend Instruktionen, die, auf der Recheneinheit gemäss Anspruch 10 ausgeführt, das Verfahren gemäss einem der

**EP 4 542 810 A1**

Ansprüche 1 bis 9 ausführen.

Fig. 1

Fig. 2

Fig. 3

$$V_{SP} + V_{TOL} + V_{FR}^{(1)} \geq V_{ME} \geq V_{SP} + V_{TOL}$$

(d)

$$V_{SP} - V_{TOL} - V_{FR}^{(1)} \leq V_{ME} \leq V_{SP} - V_{TOL}$$

(b)

$$V_{SP} + V_{TOL} \geq V_{ME} \geq V_{SP} - V_{TOL}$$

(c)

$$V_{SP} + V_{TOL} + V_{FR}^{(1)} < V_{ME}$$

(e)

$$V_{SP} - V_{TOL} - V_{FR}^{(1)} > V_{ME}$$

(a)

Fig. 4

Fig. 5

(a) $V_{ME} < V_{SP} - V_{FR}^{(2)}$

(b) $V_{SP} + V_{FR}^{(2)} \geq V_{ME} \geq V_{SP} - V_{FR}^{(2)}$

(c) $V_{ME} > V_{SP} + V_{FR}^{(2)}$

Europäisches
Patentamt

European
Patent Office

Office européen
des brevets

# EUROPÄISCHER RECHERCHENBERICHT

**Nummer der Anmeldung**

EP 24 19 4628

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ASTAPOV VICTOR ET AL: "The potential of distribution grid as an alternative source for reactive power control in transmission grid", 2018 19TH INTERNATIONAL SCIENTIFIC CONFERENCE ON ELECTRIC POWER ENGINEERING (EPE), IEEE, 16. Mai 2018 (2018-05-16), Seiten 1-6, XP033365650, DOI: 10.1109/EPE.2018.8396031 | 1,10,11 | INV. H02J3/16 H02J3/18 |
| A | * Seite 1 * | 2-9 | |
| X | EP 3 261 209 B1 (SIEMENS AG [DE]) 9. Januar 2019 (2019-01-09) | 1-4,9-11 | |
| A | * Absätze [0002] - [0027]; Abbildungen 2-5 * | 5-8 | |
| X | HAGEMANN ZITA ET AL: "Reactive Power Control in Distribution Networks to minimize the Reactive Power Balance at the Point of Common Coupling", 2019 IEEE PES INNOVATIVE SMART GRID TECHNOLOGIES EUROPE (ISGT-EUROPE), IEEE, 29. September 2019 (2019-09-29), Seiten 1-5, XP033661382, DOI: 10.1109/ISGTEUROPE.2019.8905715 | 1,10,11 | |
| A | * Zusammenfassung * | 2-9 | |

**RECHERCHIERTE SACHGEBIETE (IPC)**

H02J

Der vorliegende Recherchenbericht wurde für alle Patentansprüche erstellt

| Recherchenort | Abschlußdatum der Recherche | Prüfer |
|---|---|---|
| München | 20. Januar 2025 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 4628

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2025

| Im Recherchenbericht angeführtes Patentdokument | Datum der Veröffentlichung | Mitglied(er) der Patentfamilie | Datum der Veröffentlichung |
|---|---|---|---|
| EP 3261209 B1 | 09-01-2019 | KEINE | |

EPO FORM P0461

Für nähere Einzelheiten zu diesem Anhang : siehe Amtsblatt des Europäischen Patentamts, Nr.12/82